Europäisches Patentamt

European Patent Office

Office européen des brevets

(19)

(11) Numéro de publication : **0 012 647**
**B1**

(12) **FASCICULE DE BREVET EUROPÉEN**

(45) Date de publication du fascicule du brevet :
13.01.82

(51) Int. Cl.³ : **G 01 N 27/56**

(21) Numéro de dépôt : **79400911.8**

(22) Date de dépôt : **23.11.79**

(54) **Capteur électrochimique des concentrations d'espèces dans un mélange fluide du type à électrode de référence interne de pression partielle.**

(30) Priorité : **12.12.78 FR 7834880**

(43) Date de publication de la demande :
**25.06.80 (Bulletin 80/13)**

(45) Mention de la délivrance du brevet :
**13.01.82 Bulletin 82/02**

(84) Etats contractants désignés :
**DE GB IT SE**

(56) Documents cités :
**DE - A - 2 742 278**
**DE - A - 2 746 381**
**FR - A - 2 350 598**
**US - A - 3 915 830**
**US - A - 4 040 929**

(73) Titulaire : **THOMSON-CSF**
**173, Boulevard Haussmann**
**F-75360 Paris Cedex 08 (FR)**

(72) Inventeur : **Croset, Michel**
**"THOMSON-CSF" - SCPI 173, bld Haussmann**
**F-75360 Paris Cedex 08 (FR)**
Inventeur : **Velasco, Gonzalo**
**"THOMSON-CSF" - SCPI 173, bld Haussmann**
**F-75360 Paris Cedex 08 (FR)**

(74) Mandataire : **Lepercque, Jean et al**
**"THOMSON-CSF" - SCPI 173, Bld. Haussmann**
**F-75360 Paris Cedex 08 (FR)**

Imprimerie Jouve, 18, rue St-Denis, 75001 Paris, France

## Capteur électrochimique des concentrations d'espèces dans un mélange fluide du type à électrode de référence interne de pression partielle

L'invention se rapporte aux capteurs électrochimiques des concentrations d'espèces dans un mélange fluide et en particulier dans un gaz.

Une des familles bien connues de capteurs de pression partielle de gaz fonctionne sur le principe de la pile à concentration. Le mélange gazeux à analyser présent dans un compartiment 2, par exemple un mélange oxygène gaz inerte, est séparé d'un milieu de référence 1 par la paroi d'un électrolyte solide $E_1$ dont chaque face porte une électrode, respectivement $E_2$-$E_1$. Comme il est bien connu, les équations qui régissent ces capteurs sont :

— aux interfaces, électrodes/électrolyte :

$$O_2 \underset{\longleftarrow}{\overset{-4e^-}{\rightleftharpoons}} 2O \underset{\longleftarrow}{\rightleftharpoons} 2O^{-2} \qquad (1)$$

— la tension qui se développe alors entre les électrodes est donnée par la loi de NERNST :

$$V_{E_1/E_2} = \frac{RT}{4F} \ LN \ \frac{P_1}{P_2} \qquad (2)$$

avec
$R$ = constante des gaz parfaits = 8,314 (mole·°K),
$F$ = nombre de Faraday = 96490,
$T$ = température absolue en degrés Kelvin,
$P_1$ et $P_2$ = pressions partielles des milieux 1 et 2 dans les compartiments 1 et 2.

Dans le cas où le mélange est réactif, par exemple un mélange $O_2 + CO$, et si l'électrode est un catalyseur de la réaction de ces gaz, il se produit la réaction :

$$2\,CO + O_2 \underset{\longleftarrow}{\longrightarrow} 2\,CO_2 \qquad (3)$$

et enfin si la combustion est complète jusqu'à réaliser l'équilibre thermodynamique réversible, la relation suivante est vérifiée :

$$\frac{|CO| \quad |O^2|^{1/2}}{|CO^2|} = K\,(T) \qquad (4)$$

avec $K(T)$ un coefficient d'équilibre dépendant de la température, et $|CO|$, $|O^2|^{1/2}$, $|CO^2|$ les pressions partielles d'oxyde de carbone, d'oxygène et de gaz carbonique.

Une première approche de réalisation de capteurs de l'art antérieur utilise comme milieu de référence l'air ambiant ou du moins un réservoir d'un gaz approprié. La forme la plus courante est celle dite d'un « doigt de gant », la partie centrale étant constituée par un électrolyte solide, dont les faces intérieures et extérieures sont recouvertes par des électrodes. L'intérieur du « doigt » communique en général avec l'atmosphère et l'extérieur avec le milieu à analyser. L'électrolyte devant en général assurer le maintien mécanique, il s'agit d'un électrolyte épais.

Une autre approche propose l'utilisation d'un moyen combinant la fonction électrode et la fonction milieu de référence. On utilise pour ce faire une électrode à base d'une combinaison du type : M-MX où M est un métal et X un halogène à détecter (par exemple M-MO dans le cas de la détection de l'oxygène). A titre de perfectionnement selon cette approche, on a également proposé des capteurs réalisés selon la technique des couches minces. Ces deux types de réalisation permettent, entre autres, de s'affranchir en partie des effets parasites de la température sur la courbe de réponse des capteurs. En effet de par les équations (2) et (4), la valeur de $V_{E_1/E_2}$ dépend doublement du paramètre « température ». Un choix convenable, d'après les tables de chaleur de formation du couple M-MX permet en effet de compenser en partie les deux termes sensibles à la température.

Ces deux approches ont pour caractéristique commune que le milieu de référence $P_1$ est séparé du milieu à analyser $P_2$, essentiellement par l'électrolyte solide, que celui-ci soit sous forme d'une paroi épaisse, le plus souvent en céramique (c'est le cas généralement des capteurs en forme de « doigt de gant ») ou sous forme d'une couche mince. Ceci représente un certain nombre d'inconvénients, en particulier, et c'est souvent le cas, pour les applications où la pression absolue du milieu à analyser est forte. On peut citer parmi ces inconvénients :

— la porosité au gaz à analyser de la paroi d'électrolyte solide entraînant une dégradation prématurée du milieu de référence ;

— la difficulté d'assurer l'étanchéité entre les compartiments d'analyse et de référence et les risques de fuite en résultant ;

— les contraintes thermiques et mécaniques (en particulier dues aux vibrations) entraînant des fissures et une dégradation de la fiabilité du capteur.

Une troisième approche a également été proposée dans le cas de l'analyse de milieux réactifs. Elle consiste à utiliser deux métaux différents pour fabriquer les électrodes : par exemple une électrode en matériau non catalyseur et une électrode en matériau catalyseur. On peut alors se passer d'un milieu de référence. L'effet de pression différentielle est recréé artificiellement par l'activité sélective des deux électrodes sur le même milieu, c'est-à-dire le milieu à analyser. Outre la difficulté posée par le choix des matériaux vraiment appropriés à la réalisation des deux électrodes, de tels capteurs ne sont pas exempts de tous les inconvénients signalés. En particulier les deux électrodes et l'électrolyte sont sujets aux agressions du milieu à analyser. Certaines de ces réalisations nécessitent de plus une source auxiliaire d'alimentation électrique.

Enfin il est à noter que cette approche n'est pas utilisable dans le cas de l'analyse de milieux fluides à l'équilibre thermodynamique où l'effet de dissymétrie de fonctionnement des électrodes, catalytiques ou non, n'a plus de sens.

Dans ce qui suit, seule sera considérée l'analyse de la concentration relative d'oxyde de carbone et d'oxygène contenu dans un mélange fluide et plus particulièrement dans les gaz d'échappement d'un moteur à combustion. Cet exemple est uniquement pris à titre illustratif et ne restreint pas la portée de l'invention.

Pour pallier les inconvénients signalés précédemment, l'objet de l'invention est donc un capteur électrochimique des concentrations d'espèces contenues dans un mélange fluide comprenant une cellule électrochimique de structure plane disposée sur un substrat comportant une première électrode à référence interne de pression partielle en contact par l'une de ses faces, en tout ou partie, avec un électrolyte solide, conducteur ionique d'une des espèces du mélange fluide ou d'un ion susceptible de réagir avec cette espèce, et une seconde électrode communiquant avec le mélange fluide à analyser et en contact sur une de ses faces, en tout ou partie, avec l'électrolyte solide, ce capteur étant caractérisé en ce qu'une couche de matériau inerte, étanche aux espèces présentes dans le mélange fluide est déposée sur ladite cellule électrochimique, ladite couche étant déposée sur une zone à l'aplomb de la première électrode dont la projection dans le plan de cette électrode couvre entièrement la surface de celle-ci.

L'invention a encore pour objet un capteur électrochimique des concentrations d'espèces contenues dans un mélange fluide comprenant une cellule électrochimique comportant une première électrode à référence interne de pression partielle déposée sur un support plan doté d'une épaisseur suffisante pour assurer la rigidité mécanique de la cellule électrochimique, ce support étant constitué par un matériau électrolyte solide, conducteur ionique d'une des espèces du mélange fluide ou d'un ion susceptible de réagir avec cette espèce, de manière à ce que ladite première électrode soit en contact en tout ou partie avec cet électrolyte solide sur l'une de ces faces, et une seconde électrode communiquant avec le mélange fluide à analyser et en contact sur une de ses faces, en tout ou partie, avec l'électrolyte solide, ce capteur étant caractérisé en ce que la première électrode est protégée sur toutes ses autres faces par une couche de matériau inerte, étanche aux espèces présentes dans le mélange fluide.

La figure 1 est un capteur électrochimique de l'art intérieur du type dit en « doigt de gant ».

La figure 2 est un jeu de courbes de réponse du capteur de la figure 1, dans le cas d'un mélange fluide réactif.

La figure 3 illustre par des courbes certains défauts du capteur de la figure 1.

La figure 4 est un autre capteur de l'art antérieur comportant une électrode de référence.

La figure 5 est un jeu de courbes comparant les réponses des capteurs des figures 1 et 4.

La figure 6 est une vue de détail illustrant un défaut particulier du capteur de la figure 4.

Les figures 7 à 9 sont des capteurs réalisés selon une première approche de l'invention.

Les figures 10 et 11 sont des capteurs réalisés selon une seconde approche de l'invention.

Les figures 12 et 13 sont des variantes préférées de capteur de l'invention.

La figure 14 représente une vue en perspective du capteur de la figure 12.

La figure 15 illustre l'application des capteurs de l'invention à l'analyse des gaz d'échappement d'un moteur à combustion.

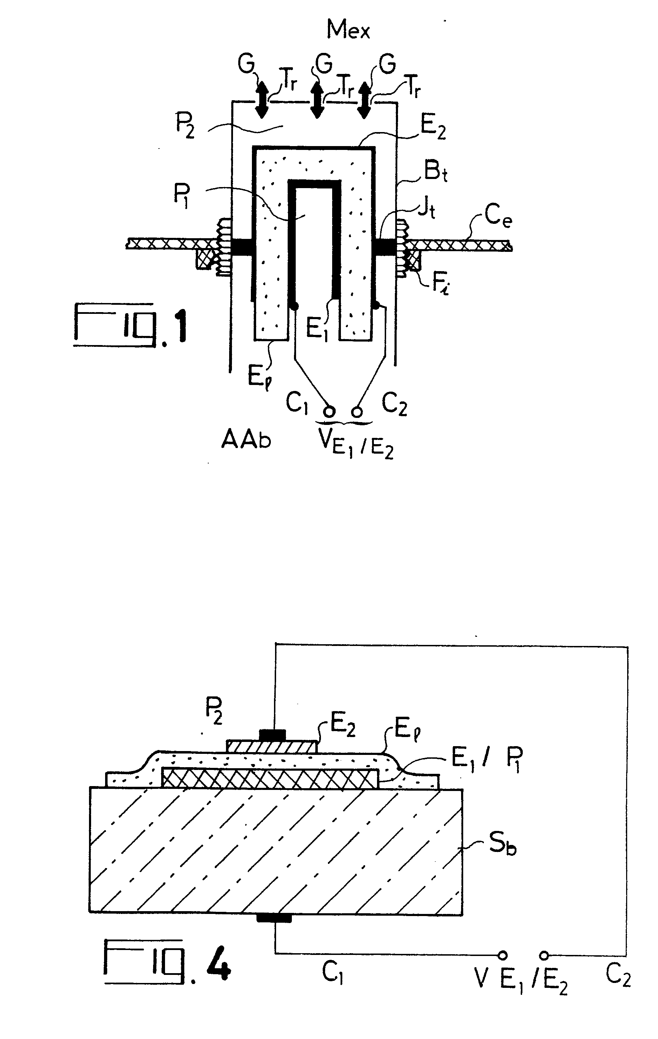

La figure 1 représente, schématisé, un capteur selon une première approche de l'art antérieur. Le capteur comprend une cellule électrochimique en forme de « doigt de gant » composée d'une première électrode $E_1$ en contact avec le milieu de référence $P_1$ qui communique avec l'atmosphère AAb, d'un électrolyte solide $E_1$ et une deuxième électrode $E_2$ en contact avec le milieu à analyser $P_2$. Ce milieu n'est pas en général constitué directement par le mélange fluide à analyser. En effet le mélange fluide peut être animé d'un mouvement très rapide et véhiculer des résidus solides qui détérioreraient très rapidement le capteur. C'est notamment le cas, si le mélange fluide à analyser est le gaz d'échappement d'un moteur à combustion. On place en général un capteur dans le conduit d'échappement par lequel sont éjectés dans l'atmosphère les résidus de la combustion : gaz, en particulier de l'oxyde de carbone, de la vapeur d'eau, de l'oxygène et du gaz carbonique, et différentes particules solides. Dans ce cas le capteur doit analyser l'écart par rapport à la stœchiométrie définie par la réaction (3). On réalise que le capteur, en plus des agressions chimiques et cinétiques, est soumis à de très fortes variations de pressions et de température. On atténue ces effets en plaçant la cellule électrochimique $E_2$-$E_1$-$E_1$ dans un boîtier $B_t$ ouvert sur le milieu à analyser Mex par des trous calibrés $T_r$ ou des chicanes qui limitent l'échange de gaz G entre le milieu à analyser Mex et l'intérieur du capteur. On parle de « prises d'essais » qui tendent vers un régime continu d'analyse. Il reste que le capteur comporte de nombreux points faibles, entre autres, les joints d'étanchéité $J_t$ à l'intérieur du capteur et, comme il a été rappelé antérieurement, la cellule électrochimique elle-même. Les joints de fixation $F_i$ du boîtier sont moins critiques : une fuite éventuelle à ce niveau ne perturbe pas l'analyse.

De plus la réponse de ce type de capteur est fortement dépendante de la température, comme il a été également indiqué, ce de par les équations (2) et (4). La figure 2 représente un jeu de courbes paramétrées en température (500 °C, 800 °C, 1 100 °C) de la différence de potentiel interélectrode $(V_{E_1/E_2})$ en fonction du rapport des concentrations relatives en oxygène et oxyde de carbone. Habituellement on ne peut utiliser que la partie centrale de ces courbes, région dans laquelle elles sont pratiquement confondues, c'est-à-dire moins dépendantes des variations de température. On détecte le brusque basculement de la courbe dont l'abscisse $\lambda_S$ représente la stœchiométrie de la réaction, définie par la rela-

tion :

$$|CO| = \frac{1}{2}|O_2| \cdot \qquad (5)$$

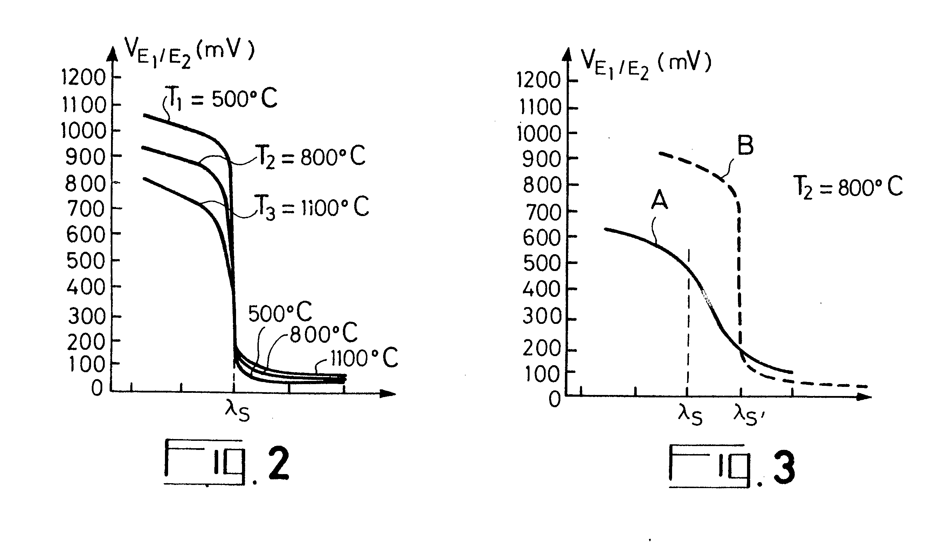

Même dans ces conditions, il est plus avantageux de pouvoir limiter les effets de la température, d'autant plus que les courbes de la figure 2 représentent la réponse d'un capteur idéal. Toutes les contraintes signalées mènent à un vieillissement du capteur qui se traduit, entre autre, par un affaissement de la courbe de réponse tel que représenté par la courbe A, sur la figure 3, pour une température donnée 800 °C. Le basculement est de moins en moins franc et de plus en plus difficile à détecter avec précision.

Enfin, du fait de l'activité catalytique insuffisante de la plupart des capteurs de l'art ancien et de mécanismes sur lesquels il sera revenu dans ce qui suit, le basculement ne se produit pas exactement à la stœchiométrie $\lambda_s$ mais à une valeur $\lambda_s$ : ce phénomène est illustré par la courbe B de la figure 3, toujours pour une température donnée.

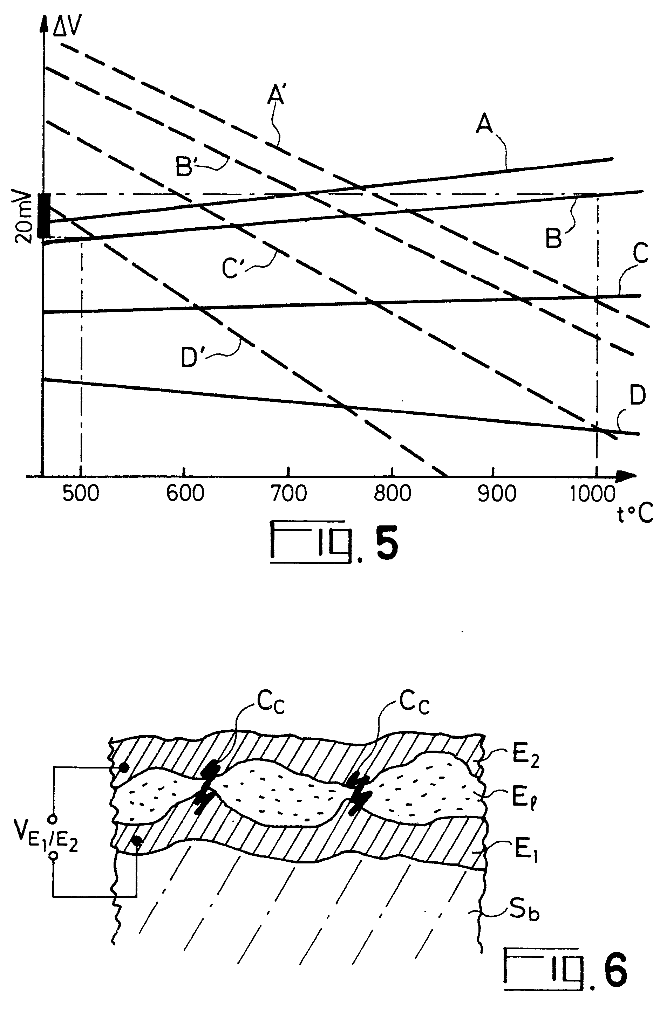

Pour pallier une partie de ces inconvénients, et en particulier pour s'affranchir d'une trop grande dépendance vis-à-vis des variations de température du mélange fluide à analyser, il a été proposé une structure de capteur dans laquelle une des électrodes servait également de milieu de référence (FR-A-2 350 598, DE-A-2 742 278, DE-A-2 746 381). Cette structure peut être réalisée de préférence par la technique des dépôts en couche mince, car de tels capteurs ont une réponse plus rapide. Le capteur de la figure 4 est un schéma de principe de ce type de structure. La cellule électrochimique se compose d'un empilement : électrode $E_1/P_1$, électrolyte $E_1$ et électrode $E_2$. Cet empilement est déposé sur un substrat $S_b$ assurant la rigidité mécanique de l'ensemble, en l'occurrence le substrat est un support conducteur assurant la liaison électrique entre le conducteur $C_1$ et l'électrode $E_1/P_1$. Le conducteur $C_2$ est reliée directement à l'électrode $E_2$.

L'électrode $E_1$, « enterrée » sous la couche d'électrolyte sert également de milieu de référence $P_1$. Pour ce faire elle est réalisée sous forme d'un composé du type : « métal/oxyde de métal ».

Dans ce cas on a les relations :

$$xM + \frac{1}{2}O_2 \rightleftharpoons M_xO \qquad (6)$$

$$\frac{|M^x| \, |O_2|^{1/2}}{|M_xO|} = K'(T) \qquad (7)$$

où M est le métal utilisé. En ayant en mémoire la relation (4) qui donne K(T), il suffit de trouver une valeur de K'(T), tel que K(T) − K'(T) = constante, pour que l'on ait une compensation en température dans une large gamme de concentration.

La figure 5 représente un double jeu de courbes expérimentales : variation $\Delta V$ (en mV.) de la réponse d'un capteur en fonction de la température, ce avec en paramètre le rapport des concentrations $\frac{CO}{CO_2}$. Les courbes A, B, C et D sont celles d'un capteur de la figure 4, avec une électrode du type métal-oxyde de métal, c'est-à-dire faisant fonction de milieu de référence ; les courbes A', B', C' et D' sont des capteurs de la figure 1 ; avec pour :

A et A'  $\frac{CO}{CO_2} = 1$

B et B'  $\frac{CO}{CO_2} = 0,5$

C et C'  $\frac{CO}{CO_2} = 0,1$

D et D'  $\frac{CO}{CO_2} = 0,01$

On voit tout de suite qu'un capteur du type de celui de la figure 4 est beaucoup moins dépendant de la température qu'un capteur du type de celui de la figure 1, les essais ayant été effectués dans les mêmes conditions.

Pour l'analyse d'un milieu fluide de la composition précitée $CO/O_2/CO_2$, on peut utiliser les associations suivantes pour la construction de l'électrode $E_1/P_1$ = Ni/NiO, Pb, PbO, Pd/PdO, Cr/Cr$_2$O$_3$, ce sans que cette énumération soit exhaustive.

Les structures de capteur de la figure 4 constituent un perfectionnement de l'art antérieur car elles permettent en particulier de rendre la réponse des capteurs plus insensible aux variations de température du mélange fluide à analyser et suppriment la différence de pression entre un milieu de référence $P_1$ qui était en général l'air à la pression atmosphérique, et le milieu à analyser, $P_2$, la différence de pression qui peut être très important comme par exemple dans le cas de l'analyse des gaz d'échappement. Cependant les éléments constitutifs de la cellule restent exposés à l'agression directe des espèces du mélange fluide, c'est-à-dire selon une direction essentiellement normale au plan des électrodes de la cellule électrochimique.

D'autre part de telles structures posent de nombreux problèmes de réalisation industrielle. En effet, il faut que la surface supérieure du substrat $S_b$ (Fig. 4) soit parfaitement lisse pour que la cellule électrochimique fonctionne correctement dans ce cas il est très difficile de faire adhérer la couche déposée sur ce substrat. Dans le cas contraire, si la surface du substrat est irrégulière, cette irrégularité va se répercuter sur les couches supérieures. En particulier la couche d'électrolyte peut présenter les disparités en épaisseur telles, que des claquages électriques peuvent se produire. En effet, là où la couche d'électrolyte est trop mince, les moindres contraintes mécaniques et thermiques peuvent entraîner des court-circuits entre $E_1$ et $E_2$. La figure 6 illustre cet état de fait, les irrégularités de structure étant fortement accentuées pour une meilleure compréhension du phénomène. Les possibilités de court-circuit sont indiquées par la référence CC. Les autres références sont identiques à celles de la figure 4.

L'invention pour pallier ces défauts va proposer un perfectionnement à la réalisation des capteurs électrochimiques, qui bien que spécialement adapté à une structure préférée de capteur qui sera décrite plus loin, peut être généralisable à la majorité des structures de capteurs électrochimiques du type comportant une électrode combinée avec le milieu de référence.

La caractéristique principale commune à toutes les structures de capteurs conformes à l'invention, est l'utilisation d'une électrode de référence de type : « métal/composé du métal » (M/MO, M/MF, M/MCl, etc.) en contact sur une face avec une partie de la surface d'électrolyte solide et protégée sur toutes les autres faces du milieu fluide à analyser par un revêtement étanche aux espèces présentes dans le mélange fluide : cette étanchéité doit être à la fois chimique (diffusion gazeuse) et électrochimique (migration ionique) ; et inerte vis-à-vis de toutes les réactions chimiques ou électrochimiques intervenant dans le fonctionnement de la cellule.

L'ensemble : électrode de référence et autres constituants de la cellule électrochimique, peut donc être plongé au sein du milieu à analyser et n'est plus soumis aux différences de pressions du type : pression du milieu à analyser/pression atmosphérique. En outre, la référence reste parfaitement stable du fait de sa protection.

Ce perfectionnement peut être apporté indifféremment aux cellules comportant un électrolyte solide massif ou déposé en couche mince.

On se placera dans ce qui suit, à titre d'exemple non limitatif dans le cas de l'analyse d'un mélange gazeux : $CO_2$, $CO$, $O_2$ (gaz d'échappement) ; l'invention s'applique aussi au cas de l'analyse de mélanges non réactifs tels que $N_2 + O_2$.

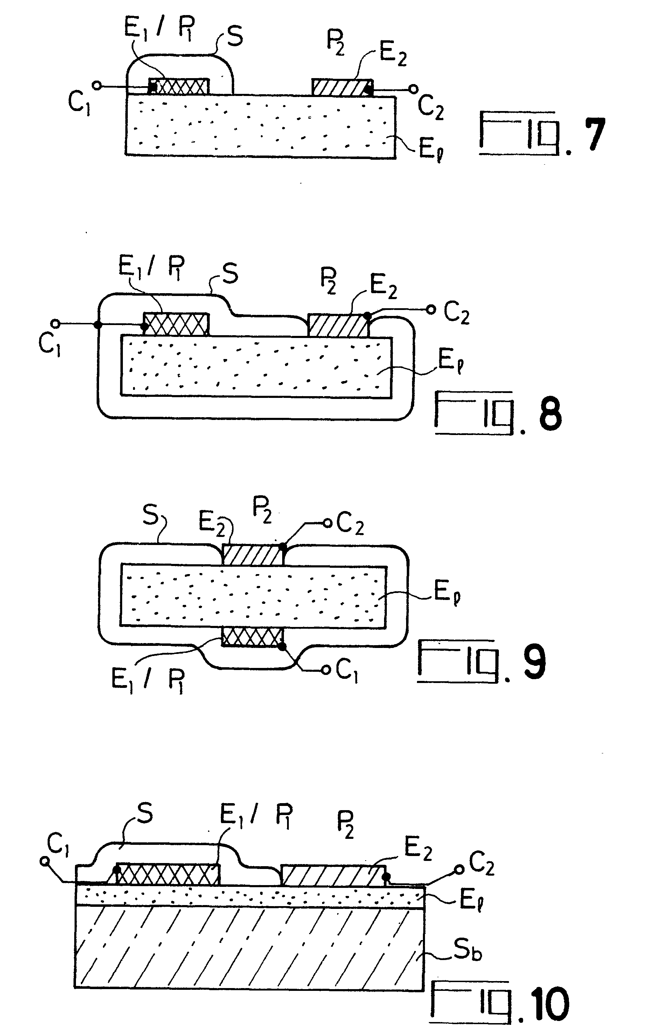

Les figures 7 à 9 décrivent des structures de capteurs conformes à l'invention dont la cellule électrochimique comporte un électrolyte massif.

La cellule électrochimique de la figure 7 se compose d'une électrode $E_1$ formant également référence $P_1$, par exemple une association Ni/NiO, en contact sur sa face intérieure avec un électrolyte solide $E_1$, qui assure également la rigidité mécanique de l'ensemble et protégée du milieu extérieur sur ses autres faces par un corps isolant, étanche et inerte S qui peut être de l'émail ou de l'alumine ; et enfin d'une électrode $E_2$, en platine par exemple en contact sur sa face intérieure avec l'électrolyte $E_1$ et sur sa face supérieure avec le milieu $P_2$ à analyser. Les techniques habituelles de limitation des échanges gazeux avec le milieu extérieur peuvent être utilisées : orifices calibrés, chicanes, corps poreux, etc. L'électrolyte solide $E_1$ peut être réalisé en zircone stabilisée à la chaux ou d'autres matériaux tels que : $Y_2O_3$, $Se_2O_3$, etc. La différence de potentiel interélectrode est transmise via les connexions $C_1/C_2$ à tout détecteur approprié. La cellule électrochimique ainsi réalisée est affranchie de tout risque de détériorations dues à des différences de pressions puisqu'elle est plongée entièrement dans le milieu à analyser, ne comporte plus de joints d'étanchéité délicats à mettre en œuvre et le milieu de référence $P_1$ confondu avec l'électrode $E_2$ est parfaitement stable, car à l'abri de toute influence du milieu extérieur.

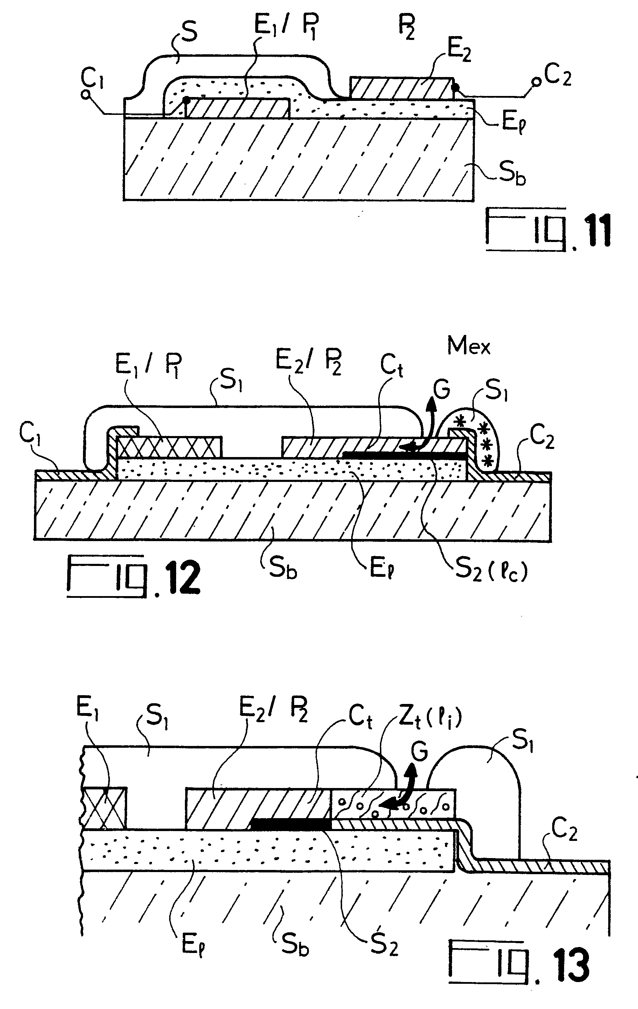

Il peut être en outre avantageux de protéger également l'électrolyte dans le but, par exemple, d'augmenter la durée de vie de l'électrode de référence, car des effets de surface parasites peuvent induire une conductivité électronique et créer un courant ionique pouvant oxyder l'électrode de référence. La figure 8 présente une structure de ce type. On retrouve les mêmes symboles que sur la figure 7. Le corps isolant S enveloppe la totalité de la cellule à l'exception de la face supérieure de l'électrode $E_2$ en contact avec le milieu à analyser $P_2$.

Enfin le perfectionnement apporté par l'invention est compatible avec une structure du type empilement $E_1$-$E_1$-$E_2$, comme représenté sur la figure 9. L'électrolyte étant massif, les risques de claquage, exposés en relation avec la figure 6, sont exclus dans cette structure.

Les capteurs comportant des cellules électrochimiques réalisées selon la technique des couches minces peuvent être préférés pour certaines applications, car ils présentent une moins grande inertie de réponse, un encombrement moindre et peuvent être réalisés selon les techniques habituelles de la microélectronique. Ils peuvent notamment, selon ce dernier aspect, être associés intimement à d'autres composants électroniques réalisés sur un même substrat ou sur un substrat voisin à l'abri des hautes températures pour que les circuits électroniques puissent fonctionner correctement. A titre d'exemple les connexions $C_1/C_2$, réalisées également par dépôt, peuvent être reliées à un amplificateur à seuil destiné à détecter le basculement des courbes de la figure 2. Cet aspect est en dehors du cadre de l'invention.

Il faut, en outre s'affranchir des difficultés de réalisation selon la technique des couches minces qui ont été signalées et en particulier les risques de court-circuits qui viennent d'être rappelés. Ceci peut être obtenu facilement en adoptant une disposition des électrodes du type coplanaire qui exclut entièrement ces risques car l'épaisseur de l'électrolyte ne joue plus aucun rôle.

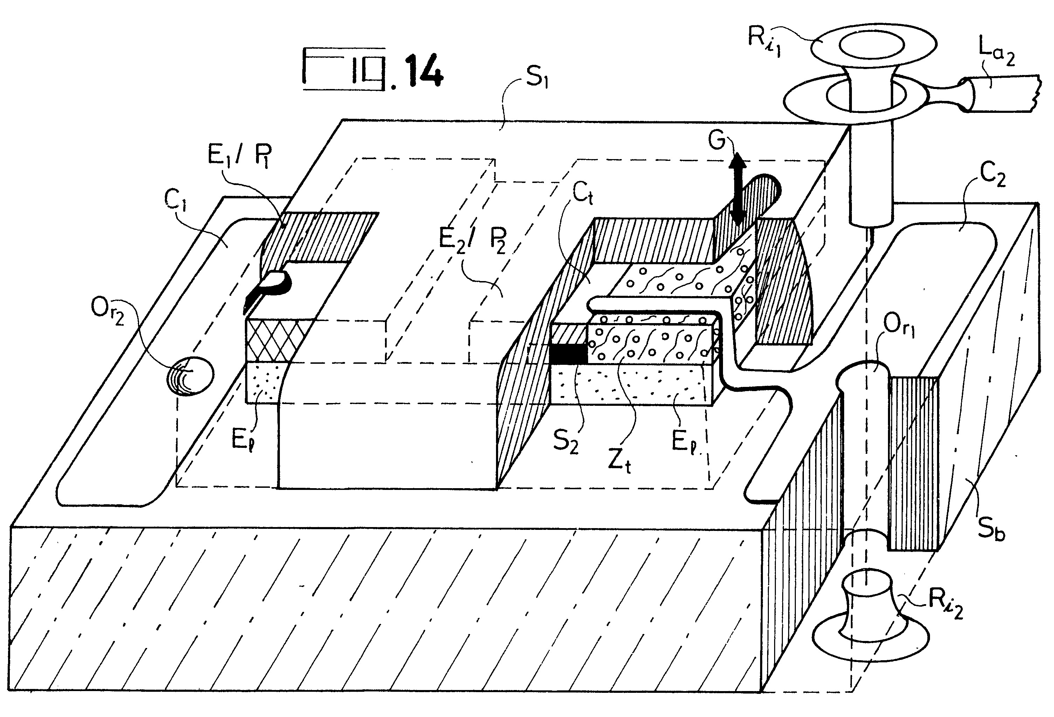

Les figures 10 et 11 illustrent deux variantes de structures de capteurs conformes à l'invention, comportant une cellule électrochimique réalisée selon la technique des couches minces. La cellule électrochimique est déposée dans les deux cas sur un substrat $S_b$ inerte qui assure la rigidité mécanique de l'ensemble. Ce substrat peut être prolongé selon une direction quelconque pour être adapté à des moyens de fixation à un boîtier.

Sur la figure 10 les deux électrodes sont déposées sur l'électrolyte solide $E_1$, lui-même déposé sur le substrat $S_b$. Les électrodes $E_1/P_1$ et $E_2$ sont situées dans un même plan, l'écart entre électrodes, restant réglable à volonté, ne constitue plus un paramètre critique. Les irrégularités de structure de la surface du substrat n'ont plus aucune influence sur le bon fonctionnement de la cellule. Le substrat peut être constitué par un bon isolant à la température de fonctionnement du dispositif (du corindon par exemple).

Selon l'aspect essentiel de l'invention, l'électrode $E_1/P_1$ est protégée du milieu extérieur par un isolant étanche et inerte S, qui la recouvre. Comme pour les capteurs des figures 7 à 9, on peut utiliser une association du type Ni/NiO pour réaliser cette électrode-milieu de référence. L'électrode $E_2$, en platine par exemple, est en contact avec le milieu à analyser $P_2$.

Sur la figure 11 les électrodes $E_1/P_1$ et $E_2$ sont situées de part et d'autre de l'électrolyte solide $E_1$, mais toujours en retrait l'une par rapport à l'autre de façon à ne pas faire intervenir le paramètre « épaisseur du diélectrique ». Un isolant S recouvre l'électrolyte situé au-dessus de l'électrode-référence $E_1/P_1$.

Dans les deux cas les connexions $C_1/C_2$ peuvent être réalisées en utilisant une laque de platine, prolongeant les électrodes vers l'extérieur de la cellule, sur le substrat et assurer ainsi les connexions de sortie du capteur. Le substrat $S_b$ dans le cas de la figure 11 peut être conducteur électrique. Il assure la connexion $C_1$.

Des valeurs typiques sont :
— épaisseur des électrodes : 1 000 Å à 100 µm ;
— épaisseur de l'électrolyte : 1 000 Å à 100 µm.

Les dépôts peuvent être réalisés par les techniques bien connues, telles que : dépôt sous vide (pulvérisation cathodique, évaporation), dépôt en phase vapeur, dépôt électrochimique ou implantation ionique ou par une combinaison de deux ou plusieurs de ces techniques.

On peut utiliser pour ces deux types de capteur les méthodes habituelles bien connues de limitation des échanges gazeux.

Dans le cas de l'analyse de mélanges fluides hors de l'équilibre thermodynamique les capteurs des figures 10 et 11, ainsi d'ailleurs que ceux des figures 7 à 8, présentent cependant certains inconvénients communs avec les capteurs de l'art antérieur. En effet, comme il a été signalé précédemment, la catalyse s'effectue pendant la traversée de l'électrode $E_2$ par le mélange fluide à analyser, dans le sens de l'épaisseur. Il est nécessaire que la catalyse soit la plus complète possible, ce qui conduit à des électrodes $E_2$ relativement épaisses.

D'autres structures de capteur ont été proposées qui assurent une bonne catalyse, tout en permettant l'utilisation d'électrodes déposées en couche mince. Ceci est obtenu en dissociant la fonction catalyse, de l'électrode de mesure $E_2$.

· Enfin en regard de la courbe B de la figure 3, il a été signalé que le basculement des courbes de réponse du capteur pouvait se produire à une valeur différente de la stœchiométrie de la réaction. Ceci est dû, d'une part, à un défaut de catalyse dans les capteurs de l'art ancien (catalyse reposant par exemple sur la traversée dans le sens de l'épaisseur d'une des électrodes par le mélange fluide à analyser) et d'autre part, dans certaines structures, les moyens de limitation de l'échange gazeux, entre le milieu extérieur où circule le gaz à analyser et l'intérieur du capteur introduisent sélectivement une distorsion dans la vitesse de diffusion (à l'intérieur du capteur) des différentes espèces du mélange fluide à analyser. On peut développer des structures de capteur propres à maîtriser ce phénomène et à l'utiliser avec profit pour réaliser des capteurs détectant des rapports de concentrations relatives de deux espèces réactives d'un mélange fluide à analyser qui diffèrent d'une valeur prédéterminée du rapport stœchiométrique de la réaction.

Les figures 12 et 13 représentent deux variantes préférées de structures de capteurs car elles combinent les avantages des structures précitées et les avantages de la présente invention, et par-là même suppriment la quasi totalité des inconvénients des capteurs de l'art antérieur et permettent la réalisation de capteurs fiables, susceptibles d'être produits en grande série, avec un taux de déchets raisonnable.

Le capteur de la figure 12 diffère de celui de la figure 10 essentiellement par le fait que l'électrode $E_2$ comporte deux zones et qu'elle communique directement avec le milieu à analyser Mex par un orifice G pratiqué dans le corps isolant $S_1$ qui la recouvre. Dans la première zone $C_t$, l'électrode est isolée en sa face inférieure de l'électrolyte $E_1$ par un corps isolant $S_2$ du même type que $S_1$, sur une longueur $l_c$. Le fluide à analyser doit traverser le corps $C_t$ qui est un catalyseur. Dans cette zone les espèces réactives du mélange à analyser (par exemple, dans le cas des gaz d'échappement : CO et $O_2$) sont amenées à l'équilibre thermodynamique complet avant qu'elles n'atteignent la cellule électrochimique proprement dite : $E_2/P_2$-$E_1$-$E_1/P_1$. $P_2$ constitue le milieu réel à analyser. Dans la réalité la zone $C_t$ n'est que le prolongement de l'électrode $E_2/P_2$ et est constituée par le même matériau, par exemple du platine, déposé en couche mince. La catalyse s'effectue par la traversée du catalyseur par le fluide suivant une direction parallèle au plan des électrodes et non plus par traversée dans le sens de l'épaisseur. Les électrodes sont prolongées vers l'extérieur par les contacts $C_1$ et $C_2$, qui peuvent être réalisés en laque de platine. On retrouve également la structure coplanaire de la figure 10 et les autres éléments du capteur sont identifiés par les mêmes références et ne seront plus décrits.

La figure 13 est une variante de la figure 12. Elle incorpore un moyen supplémentaire $Z_t$ sur une longueur prédéterminée $l_i$, qui est une impédance de transfert. Cette impédance de transfert est constituée par un corps poreux inerte et son but est de modifier, dans les proportions préétablies, le rapport des concentrations relatives des espèces réactives du mélange fluide à analyser. C'est-à-dire que l'analyse se fait non sur le mélange fluide tel qu'il circule dans le milieu extérieur au capteur, mais tel qu'il va être transformé après passage au sein de l'impédance de transfert. Le but est de pouvoir maîtriser le déca-

lage du point $\lambda_s$, de la courbe B sur la figure 3. On peut notamment appliquer un tel capteur à la régulation du mélange air-carburant dans les proportions prédéterminées. Cette application sort du cadre de l'invention, et ne sera pas décrite plus avant. On retrouve ensuite sur la figure 13 les deux zones $C_t$ et $E_2/P_2$ de la figure 12.

Ces deux capteurs peuvent être plongés directement dans le milieu à analyser. La traversée des différentes zones : catalyseur $C_t$, électrode $E_2/P_2$ (et l'impédance $Z_t$ dans le cas de la figure 13) est suffisante pour agir comme frein et limiter les échanges de fluide entre le milieu extérieur et l'intérieur du capteur.

La structure du capteur de la figure 13 est illustrée de façon plus complète sur la figure 14. Des coupes ont été effectuées pour rendre plus apparente la disposition des différents composants du capteur. Le substrat $S_b$ peut également servir à la fixation de l'ensemble capteur dans un boîtier. Des orifices $Or_1$ et $Or_2$ ont été pratiqués aux deux extrémités au travers du substrat $S_b$ au niveau des plages métalliques des contacts de sortie $C_1$ et $C_2$. Les fixations $Ri_1/Ri_2$ peuvent également servir de prise de contact électrique vers une liaison électrique $La_2$ transmettant les signaux de sortie du capteur vers l'extérieur. Pour la clarté une seule fixation a été représentée sur la figure 14. On peut représenter le capteur de la figure 12 de la même manière, en supprimant la zone $Z_t$.

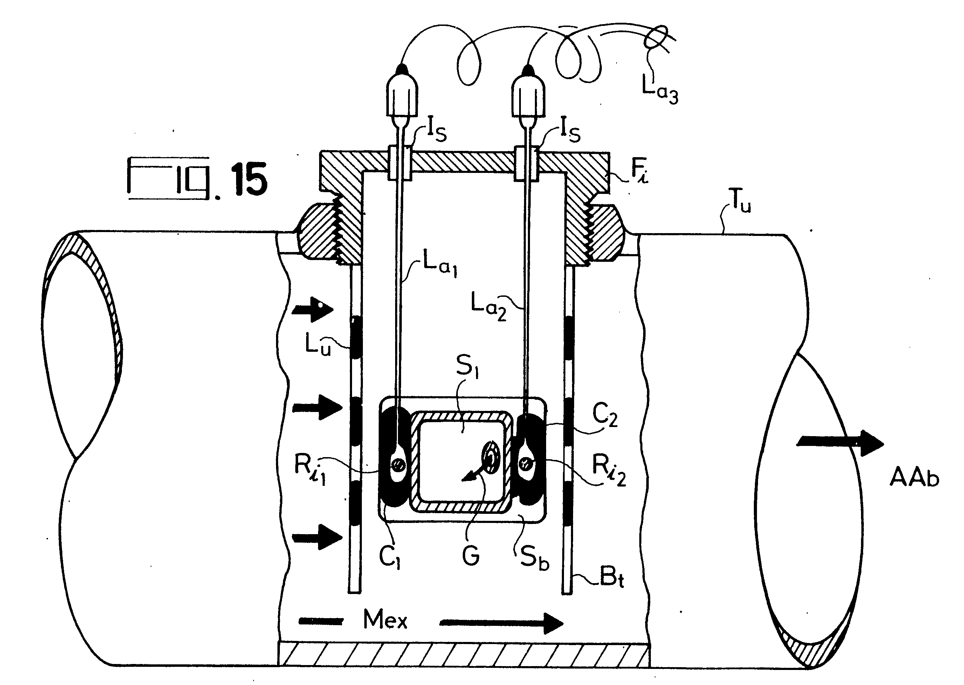

Le capteur ainsi constitué pourra être inséré dans un boîtier et plongé dans le mélange fluide à analyser. Sur la figure 15, on a représenté un capteur dans son boîtier $B_t$, utilisé pour analyser la composition des gaz d'échappement d'un moteur à combustion interne circulant dans un conduit d'échappement Tu, avant d'être éjectés dans l'atmosphère AAb. Le boîtier peut se visser dans le conduit d'échappement. Le capteur est fixé à l'aide de connexions rigides $La_1$ et $La_2$ qui traversent la tête $F_i$ du boîtier par deux bornes isolantes $I_s$. Les signaux électriques recueillis sont transmis par des liaisons $La_3$, à des organes électroniques appropriés détectant le basculement de la courbe autour de $\lambda_s$ (fig. 2) ou plus généralement $\lambda_{s'}$ (fig. 3). Le boîtier $B_t$ offre une protection supplémentaire contre les agressions directes des gaz d'échappement. La nécessité de cette protection n'est pas absolue. Des capteurs non protégés, du type de ceux des figures 12 et 13, ont subi un cycle d'essais en endurance de 350 heures, dans un environnement simulant un moteur à combustion, sans présenter de dégradations notables, ni dans leurs caractéristiques électriques, ni dans leur aspect mécanique.

L'invention n'est pas limitée aux réalisations qui viennent d'être décrites et en particulier l'environnement technologique : géométrie extérieure, mode de fixation, contacts électriques ; n'a été décrit qu'à titre purement illustratif. L'application, de même, n'est pas limitée à l'analyse des gaz d'échappement d'un moteur à combustion. Comme il est bien connu, les différents constituants du capteur pourront être choisis parmi une large gamme de matériaux et par exemple non limitatif :
— l'électrode $E_1/P_1$ peut être constituée par une des associations suivantes : Ni/NiO, Pb/PbO, Ag/AgO, Pd/PdO ou $Cr/Cr_2O_3$ ou plus généralement par un système métal/combinaison de ce métal avec un élément de la colonne $VII_A$ du tableau périodique ;
— l'électrode $E_2/P_2$ peut être en platine, or ou argent ou en alliage à base de ces métaux ;
— l'électrolyte peut être en zircone, thorine ou oxyde de cérium stabilisés par un ou plusieurs éléments des colonnes $II_A$ et $III_B$ du tableau périodique ;
— le catalyseur $C_t$ peut être en platine de texture compacte ou poreuse ; ou être constitué par un corps poreux inerte tel que de la zircone ou de l'alumine chargée de catalyseur, métal ou oxyde métallique tel que : ZnO, $CeO_2$, $MnO_2$, $Mn_2O_3$, $Fe_2O_3$, $CO_2O_3$, NiO, CuO, $Cu_2O$, $Cr_2O_3$, $TiO_2$, $V_2O_5$, $Ag_2O$ ou PbO ;
— l'impédance de transfert $Z_t$ peut être constituée par un corps poreux inerte tel que de la zircone ou l'alumine ;
— les matériaux isolants peuvent être constitués, par exemple, par des émaux diélectriques du type habituellement utilisés par les fabricants de circuits hybrides ou par d'autres couches diélectriques et inertes déposées par les techniques des couches minces ou épaisses (dans le sens habituellement retenu en micro-électronique) ;
— le substrat peut être constitué par un bon isolant électrique, inerte vis-à-vis de toutes les réactions électrochimiques intervenant dans le fonctionnement du capteur, avec une bonne tenue mécanique et une bonne adaptation thermique. Le meilleur exemple est l'alumine sous forme de céramique de haute qualité ou de préférence de l'alumine monocristalline, du type Corindon ou saphir. Selon la température de fonctionnement du capteur d'autres matériaux peuvent être retenus comme le quartz, certains oxydes de métaux sous forme de céramique ou monocristalline ou encore certains nitrures comme du nitrure de silicium.

## Revendications

1. Capteur électrochimique des concentrations d'espèces contenues dans un mélange fluide (G) comprenant une cellule électrochimique ($E_1/P_1$-$E_1$-$E_2$) de structure plane disposée sur un substrat ($S_b$) comportant une première électrode ($E_1/P_1$) à référence interne de pression partielle en contact par l'une de ses faces, en tout ou partie, avec un électrolyte solide ($E_1$), conducteur ionique d'une des espèces du mélange fluide ou d'un ion susceptible de réagir avec cette espèce, et une seconde électrode ($E_2$) communiquant avec le mélange fluide à analyser et en contact sur une de ses faces, en tout ou partie, avec l'électrolyte solide, caractérisé en ce qu'une couche de matériau inerte (S, $S_1$) étanche aux espè-

ces présentes dans le mélange fluide est déposée sur ladite cellule électrochimique, ladite couche étant déposée sur une zone à l'aplomb de la première électrode dont la projection dans le plan de cette électrode couvre entièrement la surface de celle-ci.

2. Capteur électrochimique selon la revendication 1, caractérisé en ce que l'électrolyte solide, la première électrode $(E_1/P_1)$ et la seconde électrode $(E_2)$ sont réalisées par dépôt sur ledit substrat qui assure la rigidité mécanique de la cellule électrochimique.

3. Capteur électrochimique selon l'une quelconque des revendications 1 ou 2, caractérisé en ce que la première électrode $(E_1/P_1)$ et la seconde électrode $(E_2)$, déposées toutes deux sur la même face ou sur les faces opposées de l'électrolyte solide $(E_2)$, sont disposées l'une par rapport à l'autre de telle sorte que la première électrode ou sa projection dans le plan de la seconde électrode soit en relation adjacente avec la seconde électrode.

4. Capteur électrochimique selon l'une quelconque des revendications 1 à 3, et dont la seconde électrode est divisée en plusieurs zones fonctionnellement distinctes $(E_2/P_2, C_t, Z_t)$, une des faces d'une première zone assurant le contact avec l'électrolyte solide $(E_1)$ et une des faces d'une deuxième zone communiquant avec le mélange fluide à analyser $(G)$, caractérisé en ce que ladite couche de matériau inerte $(S_1)$ et étanche aux espèces présentes dans le mélange fluide recouvre entièrement ladite cellule électrochimique à l'exception d'une fenêtre ouverte sur la deuxième zone $(C_t, Z_t)$ de manière à assurer ladite communication avec le mélange fluide à analyser $(G)$.

5. Capteur électrochimique des concentrations d'espèces contenues dans un mélange fluide $(G)$ comprenant une cellule électrochimique $(E_1/P_1\text{-}E_1\text{-}E_2)$ comportant une première électrode $(E_1/P_1)$ à référence interne de pression partielle déposée sur un support plan $(E_1)$ doté d'une épaisseur suffisante pour assurer la rigidité mécanique de la cellule électrochimique, ce support étant constitué par un matériau électrolyte solide, conducteur ionique d'une des espèces du mélange fluide ou d'un ion susceptible de réagir avec cette espèce de manière à ce que ladite première électrode soit en contact en tout ou partie avec cet électrolyte solide sur l'une de ces faces, et une seconde électrode $(E_2)$ communiquant avec le mélange fluide à analyser et en contact sur une de ses faces, en tout ou partie, avec l'électrolyte solide, caractérisé en ce que la première électrode $(E_1/P_1)$ est protégée sur toutes ses autres faces par une couche $(S)$ de matériau inerte, étanche aux espèces présentes dans le mélange fluide.

6. Capteur selon la revendication 5 caractérisée en ce que ladite couche $(S)$ de matériau inerte et étanche aux espèces présentes dans le mélange fluide recouvre entièrement la cellule électrochimique à l'exception d'une fenêtre ouverte sur la seconde électrode $(E_2)$ pour permettre ladite communication de cette électrode avec le mélange fluide à analyser $(G)$.

7. Capteur électrochimique selon l'une quelconque des revendications 1 à 6, caractérisé en ce que la première électrode, $(G_1/P_1)$ à référence interne de pression partielle, est constituée par un système métal-oxyde de ce métal ; le métal étant choisi parmi les suivants : nickel, argent, plomb, palladium ou chrome.

8. Capteur électrochimique selon l'une quelconque des revendications 1 à 6, caractérisé en ce que la première électrode à référence interne $(E_1/P_1)$ de pression partielle, est constituée par un système métal-combinaison de ce métal avec un élément de la colonne $VII_A$ du tableau périodique.

## Claims

1. Electrochemical sensor for sensing the concentration of constituents contained in fluid mixture $(G)$, comprising an electrochemical cell $(E_1/P_1\text{-}E_1\text{-}E_2)$ of planar structure applied on a substrate $(S_b)$ and including a first partial pressure internal reference electrode $(E_1/P_1)$ which contacts entirely or partially with one of its surfaces a solid electrolyte $(E_1)$ constituting an ionic conductor for one of the constituents of the fluid mixture or for an ion capable of reacting with said constituent, and a second electrode $(E_2)$ communicating with the fluid mixture to be analyzed, said second electrode contacting entirely or partially with one of its faces the solid electrolyte, characterized in that a layer of inert material $(S, S_1)$ impervious to the constituents present in the fluid mixture is deposited on said electrochemical cell, said layer being deposited in a zone which is facing the first electrode and the projection of which on the plane of this electrode covers the entire surface of the latter.

2. Electrochemical sensor according to claim 1, characterized in that the solid electrolyte, the first electrode $(E_1/P_1)$ and the second electrode $(E_2)$ are formed by deposits on said substrate which confers on the electrochemical cell its mechanical rigidity.

3. Electrochemical sensor according to any one of claims 1 or 2, characterized in that the first electrode $(E_1/P_1)$ and the second electrode $(E_2)$, which are applied both on the same face or on the two opposed faces of the solid electrolyte $(E_2)$ are disposed with respect to each other in such a manner that the first electrode or its projection on the plane of the second electrode is adjacent to the second electrode.

4. Electrochemical sensor according to any one of claims 1 to 3, wherein the second electrode is divided into a plurality of functionally different zones $(E_2/P_2, C_t, Z_t)$, one of the faces of a first zone ensuring the contact with the solid electrolyte $(E_1)$ and one of the faces of a second zone being in communication with the fluid mixture to be analyzed $(G)$, characterized in that said layer of inert material $(S_1)$ impervious to the

constituents present in the fluid mixture entirely covers said electrochemical cell, except for a window opening onto the second zone ($C_t$, $Z_t$), so as to ensure said communication with the fluid mixture to be analyzed (G).

5. Electrochemical sensor for sensing the concentration of constituents contained in a fluid mixture (G), comprising an electrochemical cell ($E_1/P_1$-$E_1$-$E_2$), comprising a first partial pressure internal reference electrode ($E_1/P_1$) applied onto a planar support ($E_1$) having a thickness sufficient to confer mechanical rigidity on the electrochemical cell, said support being constituted by a solid electrolyte material ionically conductive for one of the constituents of the fluid mixture or for an ion capable of reacting with said constituent, in such a manner that said first electrode is entirely or partially in contact with the solid electrolyte, at one of its faces, and a second electrode ($E_2$) communicating with the fluid mixture to be analyzed and in contact at one of its faces, entirely or partially, with the solid electrolyte, characterized in that the first electrode ($E_1/P_1$) is protected on all its other faces by a layer (S) of inert material impervious to the constituents present in the fluid mixture.

6. Sensor according to claim 5, characterized in that said layer (S) of inert material impervious to the constituents present in the fluid mixture covers entirely the electrochemical cell, except for a window opening onto the second electrode ($E_2$) for permitting the establishment of said communication of this electrode with the fluid mixture to be analyzed (G).

7. Electrochemical sensor according to any one of claims 1 to 6, characterized in that the first partial pressure internal reference electrode ($G_1/P_1$) is constituted by a system including a metal and an oxide of said metal, said metal being selected from the group constituted by nickel, silver, lead, palladium or chrome.

8. Electrochemical sensor according to any one of claims 1 to 6, characterized in that the first partial pressure internal reference electrode ($E_1/P_1$) is constituted by a system including a metal and a combination of said metal with an element of Column $VII_A$ of the Periodic Table.

**Ansprüche**

1. Elektrochemischer Messwertgeber zum Messen der Konzentration von Bestandteilen einer Fluidmischung (G) mit einer in Form einer ebenen Struktur ausgebildeten elektrochemischen Zelle ($E_1/P_1$-$E_1$-$E_2$), die auf einer Trägerschicht ($S_b$) angeordnet ist und eine erste innere Teildruck-Bezugselektrode ($E_1/P_1$) aufweist, welche mit einer ihrer Oberflächen gänzlich oder teilweise mit einem festen Elektrolyten ($E_1$) in Verbindung steht, der einen ionischen Leiter für einen der Bestandteile der zu analysierenden Fluidmischung bzw. für ein mit diesem Bestandteil reagierendes Ion bildet, sowie mit einer zweiten Elektrode ($E_2$), die mit der zu analysierenden Fluidmischung in Verbindung steht und mit einer ihrer Oberflächen gänzlich oder teilweise mit dem festen Elektrolyten in Berührung steht, dadurch gekennzeichnet, dass auf der elektrochemischen Zelle eine inerte, für die im Fluidgemisch vorliegenden Bestandteile undurchlässige Schicht (S, $S_1$) angebracht ist, die in einer der ersten Elektrode gegen überliegenden Zone angeordnet ist, deren Projektion auf die Ebene dieser Elektrode die gesamte Oberfläche derselben überdeckt.

2. Elektrochemischer Messwertgeber nach Anspruch 1, dadurch gekennzeichnet, dass der feste Elektrolyt, die erste Elektrode ($E_1/P_1$) und die zweite Elektrode ($E_2$) durch Aufbringen auf die Trägerschicht erzeugt sind, welche der elektrochemischen Zelle ihre mechanische Festigkeit verleiht.

3. Elektrochemischer Messwertgeber nach einem der Ansprüche 1 oder 2, dadurch gekennzeichnet, dass die erste Elektrode ($E_1/P_1$) und die zweite Elektrode ($E_2$), welche auf der selben Oberfläche oder auf entgegengesetzten Oberflächen des Festen Elektrolyten ($E_2$) aufgetragen sind, derart angeordnet sind, dass die erste Elektrode bzw. deren Projektion auf die Ebene der Zweiten Elektrode dieser zweiten Elektrode benachbart ist.

4. Elektrochemischer Messwertgeber nach einem der Ansprüche 1 bis 3, bei dem die zweite Elektrode in mehrere wirkungsmässig unterschiedliche Zonen ($E_2/P_2$, $C_t$, $Z_t$) unterteilt ist, wobei eine der Oberflächen einer ersten Zone den Kontakt mit dem festen Elektrolyten ($E_1$) bewirkt und eine der Oberflächen einer zweiten Zone mit der zu analysierenden Fluidmischung (G) in Verbindung steht, dadurch gekennzeichnet, dass die genannte inerte, für die in der Fluidmischung vorliegenden Bestandteile undurchlässige Schicht ($S_1$) die elektrochemische Zelle gänzlich überdeckt, mit Ausnahme eines auf die zweite Zone ($C_t$, $Z_t$) gerichteten Fensters, derart, dass die Verbindung mit dem zu analysierenden Fluidgemisch (G) hergestellt ist.

5. Elektrochemischer Messwertgeber zum Messen der Konzentration der in einem Fluidgemisch (G) vorliegenden Bestandteile, mit einer eine erste innere Teildruck-Bezugselektrode ($E_1/P_1$) aufweisenden elektrochemischen Zelle ($E_1/P_1$-$E_1$-$E_2$), wobei diese erste elektrode auf einem ebenen Träger ($E_1$) aufgebracht ist, dessen Dicke hinreichend gross ist, um der elektrochemischen Zelle ihre mechanische Festigkeit zu verleihen und wobei dieser Träger aus einem festen elektrolytischen Material besteht, welches einen Leiter für einen der Bestandteile der Fluidmischung bzw. für ein mit diesem Bestandteil reagierendes Ion bildet, derart, dass die erste Elektrode an einer der Oberflächen gänzlich oder teilweise mit diesem festen Elektrolyten in Berührung steht, während eine zweite Elektrode ($E_2$) mit dem zu analysierenden Fluidgemisch in Verbindung ist und an einer ihrer Oberflächen gänzlich oder teilweise mit dem festen Elektrolyten in Berührung steht, dadurch gekennzeichnet, dass die erste Elektrode ($E_1/P_1$) an allen ihren

anderen Oberflächen durch eine Schicht (S) aus inertem, für die im Fluidgemisch vorliegenden Bestandteile undurchlässigem Material geschützt ist.

6. Messwertgeber nach Anspruch 5, dadurch gekennzeichnet, dass die inerte für die im Fluid-gemisch vorliegenden Bestandteile undurch-lässige Schicht (S) die elektrochemische Zelle gänzlich überdeckt, mit Ausnahme eines auf die zweite Elektrode (E₂) gerichteten Fensters, um die Verbindung dieser Elektrode mit dem zu analysierenden Fluidgemisch (G) zu ermöglichen.

7. Elektrochemischer Messwertgeber nach einem der Ansprüche 1 bis 6, dadurch gekennzeichnet, dass die erste innere Teildruck-Bezugselektrode (G₁/P₁) aus einem ein Metall und ein Oxyd dieses Metalls umfassenden System besteht, wobei das genannte Metall Nickel, Silber, Blei, palladium oder Chrom ist.

8. Elektrochemischer Messwertgeber nach einem der Ansprüche 1 bis 6, dadurch gekennzeichnet, dass die erste innere Teildruck-Bezugselektrode (E₁/P₁) aus einem System besteht, welches ein Metall und eine Verbindung dieses Metalls und eines Elements der Spalte VII_A des Pe-riodischen Systems umfasst.

Fig.1

Fig.4

$V_{E_1/E_2}$ (mV)

1200
1100
1000
900
800
700
600
500
400
300
200
100
0

$T_2 = 800°C$

B

A

$\lambda_S$   $\lambda_{S'}$

Fig. 3

$V_{E_1/E_2}$ (mV)

1200
1100
1000
900
800
700
600
500
400
300
200
100
0

$T_1 = 500°C$

$T_2 = 800°C$

$T_3 = 1100°C$

500°C
800°C
1100°C

$\lambda_S$

Fig. 2

Fig. 5

Fig. 6

Fig. 7

Fig. 8

Fig. 9

Fig. 10

4

Fig. 11

Fig. 12

Fig. 13

Fig.14

Fig. 15